# EUROPEAN PATENT APPLICATION

(11) **EP 2 393 300 A2**
(43) Date of publication of application: **07.12.2011**
(21) Application number: 11168219.1
(22) Date of filing: 31.05.2011
(51) Int. Cl.: H04N 13/00

(54) **Image display apparatus and method for operating the same**

(30) Priority: 01.06.2010 KR 20100051825
(71) Applicant: LG Electronics, Seoul, 150-721 (KR)
(72) Inventor: KIM, Daehun, 137-724 SEOUL (KR); MOON, Seonghak, 137-724 SEOUL (KR); LEE, Junhak, 137-724 SEOUL (KR); RA, Joongmin, 137-724 SEOUL (KR); JEON, Myungjae, 137-724 SEOUL (KR)
(74) Representative: Cabinet Plasseraud

(57) **Abstract**

An image display apparatus and a method for operating the same are disclosed. A method for operating an image display apparatus includes receiving a three-dimensional (3D) image including a left-eye image and a right-eye image, increasing/reducing a disparity between the left-eye image and the right-eye image, enlarging the left-eye image and the right-eye image in such a manner that a region where the 3D image is not displayed is not generated on a display screen as positions of the left-eye image and the right-eye image are changed to increase/reduce the disparity, and displaying the enlarged left-eye image and the enlarged right-eye image. The image display apparatus can provide a 3D image having an apparent depth suitable for the user's viewing environment, and can prevent a region where no images are displayed in response to increase/reduction of the disparity, and prevent an image from being damaged or lost.

## Description

### CROSS-REFERENCE TO RELATED APPLICATION

This application claims the benefit of Korean Patent Application No. 10-2010-0051825, filed on June 1, 2010 in the Korean Intellectual Property Office, the disclosure of which is incorporated herein by reference.

### BACKGROUND OF THE INVENTION

### 1. Field of the invention

The present invention relates to an image display apparatus for displaying stereoscopic images and a method for operating the same, and more particularly to an image display apparatus and a method for operating the same, which can control the depth and size of an image according to user's viewing environments.

### 2. Description of the Related Art

An image display apparatus has a function of displaying images to a user. The image display apparatus can display a broadcast program selected by the user on a display from among broadcast programs transmitted from broadcasting stations. The transition from analog broadcasting to digital broadcasting is now progressing worldwide.

As it transmits digital audio and video signals, digital broadcasting offers many advantages over analog broadcasting, such as robustness against noise, less data loss, ease of error correction, and the ability to provide clear, high-definition images. Digital broadcasting also allows interactive viewer services.

In addition, extensive researches have recently been conducted on three-dimensional (3D) images and a variety of content items that can be provided through 3D images, and 3D stereoscopy has been widely used and commercialized in computer graphics and a variety of environments and technologies. 3D images can be transmitted through the above-mentioned digital broadcasting, and a method and apparatus for reproducing such 3D images are under development.

Specifically, when reproducing stereoscopic images or 3D images, the demand of technologies for providing optimum environments that enables a user to conveniently view stereoscopic or 3D images is rapidly increasing. For example, in recent times, a technology for minimizing eye fatigue of a user who views 3D images, a technology for maximizing 3D effects under the condition that the same screen size and the same viewing space are given, and the like have been intensively researched by many developers and companies.

### SUMMARY OF THE INVENTION

Therefore, the present invention has been made in view of the above problems, and it is an object of the present invention to provide an image display apparatus which adjusts a depth effect of an image in consideration of user's viewing environments, such that it prevents an image from being unexpectedly severed or cut and also prevents a zone of no images from occurring on a display, and a method for operating the same.

In accordance with an aspect of the present invention, the above and other objects can be accomplished by the provision of a method for operating an image display apparatus including, the method receiving a three-dimensional (3D) image including a left-eye image and a right-eye image, increasing/reducing a disparity between the left-eye image and the right-eye image, enlarging the left-eye image and the right-eye image in such a manner that a region where the 3D image is not displayed is not generated on a display screen as positions of the left-eye image and the right-eye image are changed to increase/reduce the disparity, and displaying the enlarged left-eye image and the enlarged right-eye image.

In accordance with another aspect of the present invention, a method for operating an image display apparatus includes receiving a three-dimensional (3D) image including a left-eye image and a right-eye image; increasing/reducing a disparity between the left-eye image and the right-eye image; reducing the left-eye image and the right-eye image to increase/reduce the disparity in such a manner that all regions of the left-eye image and the right-eye image are displayed on a screen after positions of the left-eye image and the right-eye image are changed to increase/reduce the disparity; and displaying the reduced left-eye image and the enlarged right-eye image.

In accordance with another aspect of the present invention, an image display apparatus includes a controller for receiving a three-dimensional (3D) image including a left-eye image and a right-eye image, and increasing/reducing a disparity between the left-eye image and the right-eye image. In response to position movement of the left-eye image and the right-eye image to increase/reduce the disparity, the controller enlarges the left-eye image and the right-eye image in such a manner that a region where the 3D image is not displayed is not generated on a display screen, or reducing the left-eye image and the right-eye image in such a manner that all regions of the left-eye image and the right-eye image are displayed on the screen, thereby adjusting the sizes of the left-eye image and the right-eye image. A display unit displays at least one of the enlarged left-eye image and the enlarged right-eye image or the reduced left-eye image and the reduced right-eye.

In accordance with still another aspect of the present invention, an image display apparatus includes a controller and a display unit. The controller receives a three-dimensional (3D) image including a left-eye image and a right-eye image, and increases/reduces a disparity between the left-eye image and the right-eye image. The controller reduces the left-eye image and the right-eye image to increase/reduce the disparity in such a manner that all regions of the left-eye image and the right-eye image are displayed on a screen after positions of the left-eye image and the right-eye image are changed to increase/reduce the disparity. The display unit displays the reduced left-eye image and the reduced right-eye image.

### BRIEF DESCRIPTION OF THE DRAWINGS

The above and other objects, features and other advantages of the present invention will be more clearly understood from the following detailed description taken in conjunction with the accompanying drawings, in which:
FIG. 1 illustrates an image display apparatus according to one embodiment of the present invention.
FIG. 2 is a block diagram illustrating an image display apparatus according to one embodiment of the present invention.
FIG. 3 is a block diagram illustrating a controller contained in the image display apparatus according to one embodiment of the present invention.
FIG. 4 illustrates examples of 3D image signal formats for implementing 3D images.
FIG. 5 illustrates a variety of scaling formats of 3D image signals according to an embodiment of the present invention.
FIG. 6 illustrates how an apparent depth of a 3D image or a 3D object varies according to an embodiment of the present invention varies.
FIG. 7 shows how the apparent depth of an image is controlled according to an embodiment of the present invention.
FIGS. 8 and 9 illustrate an image display apparatus and a remote control device according to one embodiment of the present invention.
FIG. 10 is a flowchart illustrating a method for operating the image display apparatus according to one embodiment of the present invention.
FIG. 11 is a flowchart illustrating a method for operating the image display apparatus according to another embodiment of the present invention.
FIG. 12 is a flowchart illustrating a method for operating the image display apparatus according to still another embodiment of the present invention.
FIGS. 13 to 16 illustrate image processing methods when a parallax interval (i.e., a disparity) is increased or reduced according to one embodiment of the present invention.

### DETAILED DESCRIPTION OF THE PREFERRED EMBODIMENTS

Embodiments of the present invention will be described below with reference to the attached drawings.

The terms "module" and "unit" used to signify components are used herein to aid in the understanding of the components and thus they should not be considered as having specific meanings or roles. Accordingly, the terms "module" and "unit" may be used interchangeably.

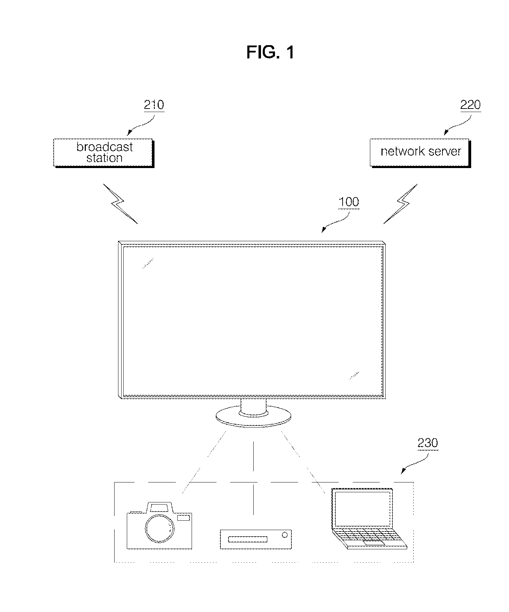

FIG. 1 illustrates an image display apparatus according to one embodiment of the present invention.

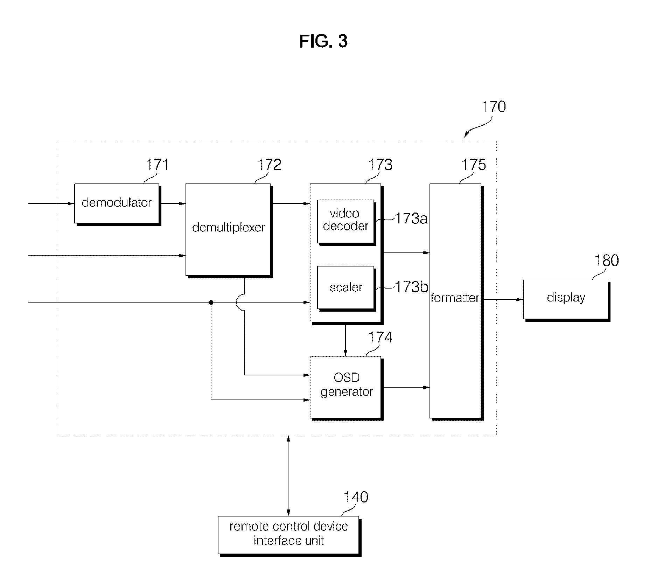

Referring to FIG. 3, the image display apparatus 100 can communicate with a broadcast station 210, a network server 220 or an external device 230.

The image display apparatus 100 may receive a broadcast signal including an image signal from the broadcast station 210. The image display apparatus 100 may process video and audio signals or a data signal included in the broadcast signal so as to be suitably output by the image display apparatus 100. The image display apparatus 100 may output video or audio based on the processed video signal.

The image display apparatus 100 may communicate with the network server 220. The network server 220 is a device capable of transmitting and receiving signals to and from the image display apparatus 100 over a network. For example, the network server 220 may be a mobile phone that can be connected to the image display apparatus 100 through a wired or wireless base station (BS). The network server 220 may also be a device that can provide content to the image display apparatus 100 over the Internet. A content provider may provide content to the image display apparatus 100 using the network server.

The image display apparatus 100 may communicate with the external device 230. The external device 230 is a device that can directly transmit and receive signals to and from the image display apparatus 100 by wire or wirelessly. For example, the external device 230 may be a media storage device or player used by the user. That is, the external device 230 may be a camera, a DVD player, a Blu-ray player, a personal computer, or the like.

The broadcast station 210, the network server 220, and the external device 230 may transmit a signal including a video signal to the image display apparatus 100. The image display apparatus 00 may display an image based on the video signal included in the received signal. The image display apparatus 100 may transmit signals, which have been transmitted from the broadcast station 210 and the network server 220 to the image display apparatus 100, to the external device 230. The image display apparatus 100 may also transmit signals, which have been transmitted from the external device 230 to the image display apparatus 100, to the broadcast station 210 or to the network server 220. That is, the image display apparatus 100 may not only directly play content included in signals transmitted from the network server 220 and the external device 230 but may also transmit the content to another device.

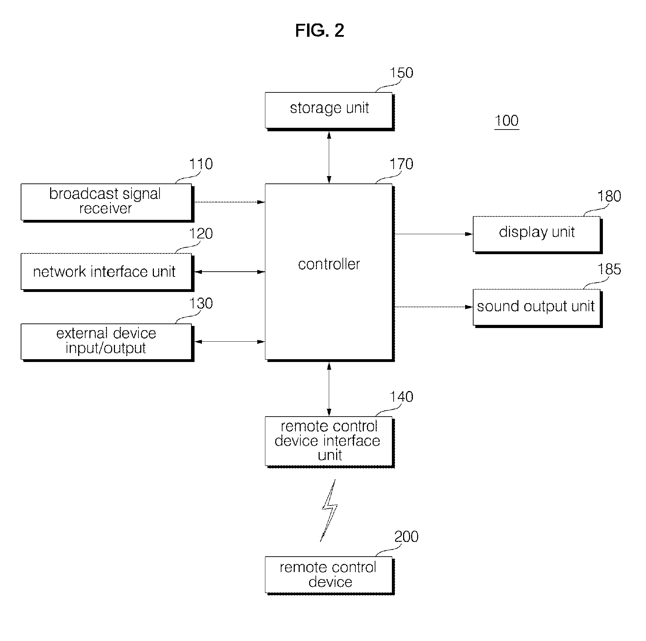

FIG. 2 is an internal block diagram illustrating an image display apparatus according to an embodiment of the present invention.

As shown in FIG. 2, the image display apparatus 100 according to one embodiment of the present invention may include a broadcast signal receiver 110, a network interface unit 120, an external device input/output (I/O) unit 130, a remote control device interface unit 140, a storage unit 150, a controller 170, a display unit 180, and a sound output unit 185.

The broadcast signal receiver 110 may receive Radio Frequency (RF) broadcast signals corresponding to all stored channels or a channel selected by the user from among RF broadcast signals received through an antenna from a broadcast station (denoted by "210" in FIG. 1) or the like. The broadcast signal receiver 110 may convert the received RF broadcast signals into intermediate frequency (IF) signals or baseband video or audio signals and may then output the converted signals to the controller 170.

The broadcast signal receiver 110 may receive single-carrier RF broadcast signals according to an Advanced Television System Committee (ATSC) scheme or multi-carrier RF broadcast signals according to a Digital Video Broadcasting (DVB) scheme. The broadcast signal receiver 110 may sequentially select RF broadcast signals of all broadcast channels stored through a channel storage function from among received RF broadcast signals and may convert the selected RF broadcast signals into intermediate frequency (IF) signals or into baseband video or audio signals. The purpose of this is to display a thumbnail list including a plurality of thumbnail images corresponding to the broadcast channels on the display unit 180. Thus, the broadcast signal receiver 110 may sequentially/periodically receive RF broadcast signals of all selected or stored channels.

The network interface unit 120 provides an interface for connection to a wired/wireless network including the Internet or to a network server (denoted by "220" in FIG. 1) on the network.

The network interface unit 120 may include a wireless communication unit which allows the image display apparatus 100 to be connected wirelessly to the Internet. A communication protocol such as Wireless Local Area Network (WLAN) (Wi-Fi), Wireless broadband (WiBro), World Interoperability for Microwave Access (WiMax), or High Speed Downlink Packet Access (HSDPA) may be used for wireless Internet access.

The network interface unit 120 may receive content or data provided by a content provider or a network operator over a network. That is, the network interface unit 120 may receive content such as a broadcast, game, or Video On Demand (VOD) and related information provided from the content provider over the network. The network interface unit 120 may also receive update information and update files of firmware provided by the network operator.

The network interface unit 120 may also be connected to a communication network that enables video or voice communication. The communication network may indicate a network including a broadcast communication network, a public phone network, a mobile communication network, or the like connected through a LAN.

The external device input/output (I/O) unit 130 may connect the image display apparatus 100 and an external device (denoted by "230" in FIG. 1). To accomplish this, the external device input/output (I/O) unit 130 may include an A/V input/output (I/O) unit or a wireless communication unit.

The external device input/output (I/O) unit 130 is connected wirelessly or by wire to an external device such as a Digital Versatile Disk (DVD) player, a Blu-ray player, a game console, a camera, a camcorder, or a computer (laptop). The external device input/output (I/O) unit 130 transfers a video signal, an audio signal, or a data signal received from the connected external device to the controller 170 of the image display apparatus 100. The external device input/output (I/O) unit 130 may also output a video signal, an audio signal, or a data signal processed by the controller 170 to the connected external device.

An A/V input/output (I/O) unit is a module that allows a video signal and an audio signal from an external device to be input to the image display apparatus 100. The A/V input/output (I/O) unit may be one or more of an Ethernet terminal, a USB terminal, a Composite Video Banking Sync (CVBS) terminal, a component terminal, an (analog) S-video terminal, a Digital Visual Interface (DVI) terminal, a High Definition Multimedia Interface (HDMI) terminal, an RGB terminal, and a D-SUB terminal.

The wireless communication unit may perform wireless communication with another external device. The image display apparatus 100 may be connected to another external device over a network according to a communication protocol such as Bluetooth, Radio Frequency Identification (RFID), Infrared Data Association (IrDA), Ultra Wideband (UWB), or ZigBee.

The external device input/output (I/O) unit 130 may also be connected to one of a variety of set-top boxes through at least one of the various terminals described above to perform input/output operations with the connected set-top box.

For example, when the set-top box is an Internet Protocol (IP) TV set-top box, the external device input/output (I/O) unit 130 may transfer a video, audio, or data signal processed by the IP TV set-top box to the controller 170 to implement bidirectional communication. Signals processed by the controller 170 may be transferred to the IP TV set-top box.

The IPTV may include an ADSL TV, a VDSL TV, an FTTH TV, or the like according to the type of the transmission network and may also include a TV over DSL, a video over DSL, a TV over IP (TVIP), a Broadband TV (BTV), or the like. The IPTV may also include an Internet TV, a full browsing TV, or the like that can connect to the Internet.

The remote control device interface unit 140 may include a wireless communication unit that can transmit and receive signals wirelessly to and from the remote control device 200 and a coordinate calculation unit that can calculate coordinates of a pointer corresponding to movement of the remote control device 200. The remote control device interface unit 140 may transmit and receive signals wirelessly to and from the remote control device 200 through an RF module. The remote control device interface unit 140 may receive signals that the remote control device 200 has transmitted according to an IR communication protocol through the RF module.

The coordinate calculation unit of the remote control device interface unit 140 may perform hand trembling or error correction from a signal corresponding to movement of the remote control device 200 which has been received through the wireless communication unit of the remote control device interface unit 140. The coordinate calculation unit may calculate coordinates of a pointer to be displayed on the display of the image display apparatus 100 after hand trembling or error correction.

A signal transmitted by the remote control device 200, which has been input to the image display apparatus 100 through the remote control device interface unit 140, is output to the controller 170 of the image display apparatus 100. The controller 170 may determine information regarding key control or movement of the remote control device 200 from the signal transmitted by the remote control device 200 and may generate and output various control signals for controlling the operation of the image display apparatus 100 according to the determined information.

In another example, the remote control device 200 may calculate pointer coordinates corresponding to movement of the remote control device 200 and may output the calculated pointer coordinates to the remote control device interface unit 140. In this case, the remote control device interface unit 140 may transmit information regarding the pointer coordinates received from the remote control device 200 to the controller 170 without an additional procedure such as hand trembling or error correction.

The storage unit 150 may store a video signal and audio and data signals associated with the video signal which are input to the image display apparatus 100. For example, a moving image storage command may be input to the image display apparatus 100 that is reproducing a moving image based on a broadcast signal. The image display apparatus 100 may store at least part of the moving image that is being reproduced in the storage unit 150 in response to the moving image storage command input to the image display apparatus 100. When a command to reproduce a stored moving image is input to the image display apparatus 100, the image display apparatus 100 may read a video signal and audio and data signals associated with the video signal. The image display apparatus 100 may reproduce a moving image based on the read signal.

The controller 170 controls the overall operation of the image display apparatus 100. The controller 170 may receive a signal transmitted by the remote control device 200 or a different type of control command input unit. The image display apparatus 100 may also receive a command through a local key provided on the image display apparatus 100. The controller 170 determines a command included in the received signal or a command corresponding to the local key and controls the image display apparatus 100 according to the command.

For example, when the user inputs a command to select a channel, the controller 170 controls the broadcast signal receiver 110 to allow a broadcast signal provided in the selected channel to be input through the broadcast signal receiver 110. The controller 170 may also process and output a video signal and an audio signal of the selected channel to the display unit 180 or the audio output unit 185. The controller 170 may also allow information of the channel selected by the user or the like to be output, together with the video signal and the audio signal, through the display unit 180 or the audio output unit 185.

The controller 170 may process a video signal or an audio signal based on information included in a data signal that is received together with the video signal or audio signal. For example, the controller 170 may determine a format of a video signal input to the image display apparatus 100 using a data signal associated with the video signal and may process the video signal input to the image display apparatus 100 according to the determined format.

The controller 170 may generate, from a data signal associated with a video signal, an On Screen Display (OSD) signal that can display an OSD associated with an image generated based on the video signal. The controller 170 may also generate a graphical user interface to allow the user to check related information on the image display apparatus 100 or to input an image display apparatus control command to the image display apparatus 100.

The user may also input a different type of video or audio output command through the remote control device 200 or a different type of control command input unit. For example, the user may desire to view a camera or camcorder video signal input through the external device input/output (I/O) unit 130 rather than to view a broadcast signal. In this case, the controller 170 may process a video signal or an audio signal input to the image display apparatus 100 through a USB input unit or the like of the external device input/output (I/O) unit 130 so that the video signal or audio signal input to the image display apparatus 100 is output through the display unit 180 or the sound output unit 185.

The controller 170 of this embodiment may process a 2D or 3D image signal input from the outside so that the video signal can be displayed on the display unit 180. The controller 170 may process the video signal so that the generated graphical user interface is displayed three-dimensionally on the display unit 180. The controller 170 will be described later in detail with reference to FIG. 3.

The display unit 180 may convert a video signal, a data signal, and an OSD signal processed by the controller 170 or a video signal, a data signal, etc., received through the external device input/output (I/O) unit 130 into respective RGB signals to generate drive signals. The display unit 180 may display a screen according to the generated drive signals. The display unit 180 may be a PDP, an LCD, an OLED, a flexible display, or the like. The image display apparatus 100 and the display unit 180 according to an embodiment of the present invention may perform 3D display.

3D display schemes may be classified into an assisted display scheme and a standalone display scheme according to how the user perceives a 3D image.

The standalone display scheme is a method in which a 3D image can be implemented on a display without a separate subsidiary device. The user can view a 3D image on a display using the standalone display scheme without an additional device (for example, polarized glasses). Examples of the standalone display scheme include a lenticular scheme, a parallax barrier, or the like.

The assisted display scheme implements a 3D image using a subsidiary device. Examples of the assisted display scheme include a head-mount display (HMD), a glass-based scheme, or the like. Glasses used in the glass-based scheme include polarized glasses, shutter glasses, spectrum filters, or the like.

The display unit 180 may be constructed as a touch screen to function not only as an output device but also as an input device.

The audio output unit 185 receive audio signals (for example, stereo signals, 3.1 channel signals, or 5.1 channel signals) processed by the controller 170 and outputs audio according to the audio signal. The sound output unit 185 may be implemented as various types of speakers.

FIG. 3 is an internal block diagram of the controller 170 in the image display apparatus according to an embodiment of the present invention.

Referring to FIG. 3, the controller 170 may include a demodulator 171, a demultiplexer 172, a decoder 173, an OSD generator 174, and a formatter 175. The demodulator 171 may perform an operation for demodulating a broadcast signal received by the broadcast signal receiver 110.

For example, the demodulator 171 may receive a digital intermediate frequency (DIF) signal converted by the broadcast signal receiver 110 and may perform a demodulation operation for the same. The demodulator 171 may perform channel decoding. To accomplish this, the demodulator 171 may include a convolution decoder, a de-interleaver, a Reed-Solomon decoder, or the like to perform convolution decoding, de-interleaving, Reed-Solomon decoding, or the like.

The demodulator 171 may output a stream signal (TS) after performing demodulation and channel decoding. The stream signal (TS) may be a multiplexed signal containing a video signal, an audio signal, or a data signal. For example, the stream signal (TS) may be an MPEG-2 Transport Stream (TS) in which an MPEG-2 video signal, a Dolby AC-3 audio signal, and the like are multiplexed. Specifically, the MPEG-2 TS may include a 4-byte header and a 184-byte payload.

The demodulator 171 may include individual units corresponding respectively to an ATSC scheme and a DVB scheme. The stream signal output by the demodulator 171 may be input to the demultiplexer 172.

The demultiplexer 172 may demultiplex the received stream signal, for example, the MPEG-2 TS, into a video signal, an audio signal, and a data signal. The stream signal input to the demultiplexer 172 may be a stream signal output from the demodulator 171, the network interface unit 120, or the external device input/output (I/O) unit 130.

The demultiplexed data signal may be an encoded data signal. The encoded data signal may include Electronic Program Guide (EPG) information including broadcast information such as a title, a start time, and an end time of a broadcast program that is broadcast on each channel. For example, the EPG information may include ATSC-Program and System Information Protocol (ATSC-PSIP) information in the case of the ATSC scheme and may include DVB-Service Information (DVB-SI) in the case of the DVB scheme.

The decoder 173 may decode the demultiplexed signals. The decoder 173 of this embodiment may include a video decoder 173a that decodes the demultiplexed video signal and a scaler 173b that adjusts the resolution of the decoded video signal so that the signal can be output through the image display apparatus 100.

The OSD generator 174 may generate an OSD signal so that an object is displayed as an OSD on the display unit 180. The OSD may indicate information associated with an image displayed on the display unit 180. The OSD may include a user interface for receiving a control signal, a user command, or the like which can control the operation of the image display apparatus 100.

The OSD generator 174 according to an embodiment of the present invention may extract a thumbnail image corresponding to the time of reproduction of content that is being reproduced or that may be reproduced on the image display apparatus 100. The OSD generator 174 may generate an OSD signal to allow the user to perceive or view a 3D object including the extracted thumbnail image and then may output the generated OSD signal to the formatter 175.

The formatter 175 may determine a format of an input video signal with reference to a data signal associated with the video signal. The formatter 175 may convert an input video signal into a format suitable for the display unit 180 and then may output the converted video signal to the display unit 180.

The image display apparatus 100 of this embodiment may display a 3D image on the display unit 180. In this case, the formatter 175 may convert the input video signal to generate a 3D image signal according to a specific format suitable for display on the display unit 180. In an embodiment of the present invention, the 3D image signal may include a left-eye image signal and/or a right-eye image signal. In an embodiment of the present invention, a left-eye image and a right-eye image may be used to implement a 3D image as described above and the left-eye image signal may be a video signal for displaying a left-eye image and the right-eye image signal may be a video signal for displaying a right-eye image. The formatter 175 outputs the generated 3D image signal to the display unit 180. The display unit 180 displays a 3D image based on the generated 3D image signal.

In this embodiment, the image display apparatus 100 may display an OSD as a 3D object according to an OSD signal generated by the OSD generator 174. The formatter 175 may convert the OSD signal generated by the decoder 173 into a 3D image signal in a format that can be displayed on the display unit 180 so that multiple-view images (for example, a left-eye image and a right-eye image) which constitute the 3D object are displayed on the display unit 180 and then may output the 3D image signal to the display unit 180.

The image display apparatus 100, which separately includes a user interface generation unit, may further include a mixer that can mix video signals output by the decoder 173 and the OSD generator 174 with a user interface video signal output by the user interface generation unit. The mixer may be included in the formatter 175 in order to mix video signals output by the decoder 173 and the OSD generator 174.

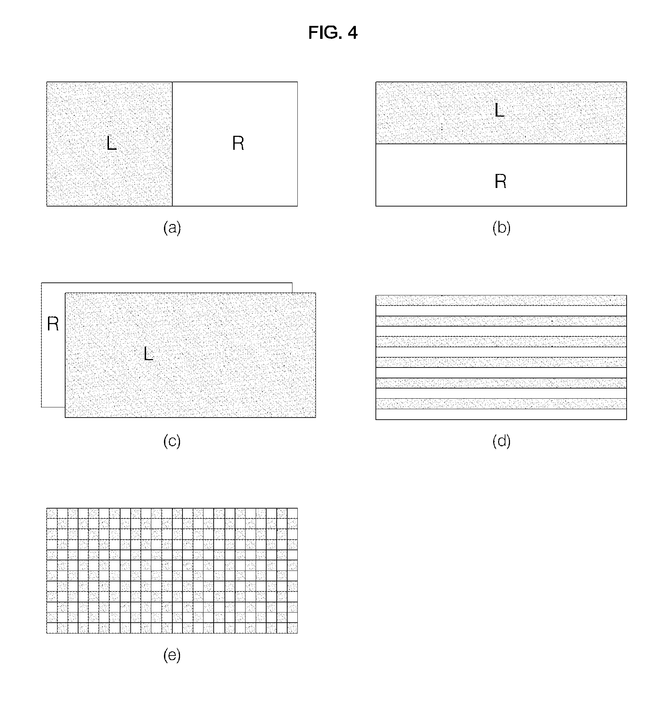

FIG. 4 illustrates an example of a 3D image signal format that can implement a 3D image. The 3D image signal format may be determined according to a method of arranging a left-eye image and a right-eye image generated to implement a 3D image.

A 3D image may include multiple-view images. The user can view the multiple-view images through left and right eyes. The user may experience the stereoscopic effect of the 3D image through the difference between images perceived by the left and right eyes. In an embodiment of the present invention, the multiple-view images for implementing a 3D image include a left-eye image that the user may perceive by the left eye and a right-eye image that the user may perceive by the right eye.

A scheme in which the left-eye image and the right-eye image are arranged left and right as shown in FIG. 4(a) is referred to as a "side by side format". A scheme in which the left-eye image and the right-eye image are arranged up and down as shown in FIG. 4(b) is referred to as a "top/down format". A scheme in which the left-eye image and the right-eye image are arranged at different times through time division as shown in FIG. 4(c) is referred to as a "frame sequential format". A scheme in which the left-eye image and the right-eye image are mixed in lines as shown in FIG. 4(d) is referred to as an "interlaced format". A scheme in which the left-eye image and the right-eye image are mixed in boxes as shown in FIG. 4(e) is referred to as a "checker box format".

A video signal included in a signal input to the image display apparatus 100 from the outside may be a 3D image signal that may implement a 3D image. A graphical user interface video signal representing information regarding the image display apparatus 100 or a graphical user interface video signal generated to allow input of a command regarding the image display apparatus 100 may be a 3D image signal. The formatter 175 may mix the 3D image signal included in the signal input to the image display apparatus 100 from the outside and the graphical user interface 3D image signal and then may output the mixed video signal to the display unit 180.

The formatter 175 may determine a format of the mixed 3D image signal with reference to an associated data signal. The formatter 175 may process a 3D image signal so as to be suitable for the determined format and may output the processed 3D image signal to the display unit 180. When a received 3D image signal has a format that can be output through the display unit 180 is limited, the formatter 175 may convert the received 3D image signal to be suitable for the 3D image signal format that can be output through the display unit 180 and then may output the converted video signal to the display unit 180.

The OSD generator 174 may generate an On Screen Display (OSD) signal. Specifically, the OSD generator 174 may generate a signal for displaying various information as graphics or text on the screen of the display unit 180 based on at least one of a video signal and an audio signal or a user input signal input through a different type of control command input unit. The OSD generator 174 may also generate a signal for displaying a graphic or text that allows input of a control command to the image display apparatus 100. The generated OSD signal may be output, together with a video signal which has been subjected to image processing and a data signal which has been subjected to data processing, to the display unit 180.

As a signal generated for graphic or text display, the OSD signal may include information regarding a user interface screen, various menu screens, widgets, and icons that can be displayed on the display unit 180. The OSD generator 174 may generate the OSD signal as a 2D video signal or a 3D image signal. The OSD signal generated by the OSD generator 174 may include a graphical user interface 3D image signal that is mixed with another video signal.

The display unit 180 may display an object according to the OSD signal generated by the OSD generator 174. The object of this embodiment may be one of a volume control button, a channel control button, an image display device control menu, an icon, a navigation tab, a scroll bar, a progress bar, a text bar, and a window.

Through the object displayed on the display unit 180, the user can view or read information regarding the image display apparatus 100 or information regarding an image that is being displayed on the image display apparatus 100. In addition, the user can input a command to the image display apparatus 100 through the object displayed on the display unit 180. On the other hand, the term "3D object", as used this specification, refers to an object to which stereoscopic effects have been applied to provide 3D sensation. The 3D object may be a PIP image, an EPG representing broadcast program information, various image display device menus, widgets, icons, or the like.

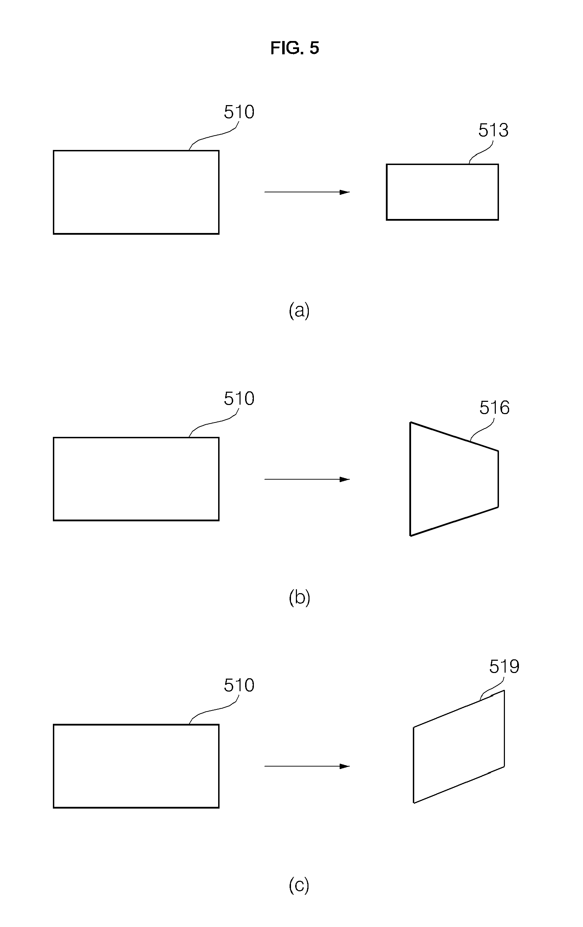

FIG. 5 illustrates various scaling schemes of a 3D image signal or various possible forms of an image according to an embodiment of the present invention. Size control or slope control of a 3D object is described below with reference to FIG. 5.

The controller 170 or a module for image processing such as a scaler included in the controller 170 may enlarge or reduce the entirety of a 3D image signal or a 3D object 510 in a 3D image signal at a specific ratio as shown in FIG. 5(a), where the reduced 3D object is denoted by "513". This is a general image processing function of the scaler or controller.

The controller 170 may modify a screen into the form of a polygon such as a trapezoid or parallelogram or generate a screen in the form of a polygon such as a trapezoid or parallelogram to represent an image rotated by a specific angle or inclined in a specific direction. A video signal processed into the form of a trapezoid or parallelogram for displaying an inclined or rotated screen may be received. In the case where the controller 170 generates and outputs a 3D object corresponding to an OSD, a 3D image signal, or the like to the display, the controller 170 generates the 3D object as an image having a trapezoidal form 516 as shown in FIG. 5(b) or an image having a parallelogram form 519 as shown in FIG. 5(c).

Not only when an image received from a broadcast station (denoted by "210" in FIG. 1), a network server (denoted by "230" in FIG. 1), or an external input device (denoted by "230" in FIG. 1) or a 3D image or a 3D object such as an OSD generated by the controller 170 is enlarged or reduced as shown in FIG. 5(a) but also when a 3D image signal or the like is generated or processed into a trapezoidal form 516 or a parallelogram form 519 as shown in FIG. 5(b) or FIG. 5(c), the stereoscopic effect (i.e., 3D effect) of the 3D image signal or the 3D object in the 3D image signal may be more emphasized. This can also serve to diversify and maximize the stereoscopic sensation of the image perceived by the user.

The slope or rotation effect that is given to the image according to the shape of the image may be controlled by increasing or reducing the difference between the two parallel sides of the trapezoidal form 516 illustrated in FIG. 5(b) or the difference between the two diagonal dimensions of the parallelogram form 519 illustrated in FIG. 5(c).

In this case, different disparities may be applied to parts of one 3D image or one 3D object to generate a tilting effect. That is, one 3D image or one 3D object may have both parts with large apparent depths (or depth effects) and parts with small apparent depths so that the image is viewed as inclined or rotated. This indicates that different disparities may be applied to parts of a pair of left-eye and right-eye images.

In addition, when one of a left-eye image and a right-eye image for displaying a 3D image or a 3D object is generated as an image having a form shown in FIG. 5 by the OSD generator or the scaler in the controller 170, the generated left-eye or right-eye image is copied to generate the other right-eye or left-eye image, thereby generating a pair of left-eye and right-eye images.

On the other hand, scaling of the 3D image signal or the 3D object may also be performed by the formatter 175 of the controller 170 described above. Each 3D image signal shown in FIG. 5 may be a left-eye image signal, a right-eye image signal, or a combination of left-eye and right-eye image signals.

The formatter 175 may receive a decoded video signal and separate a 2D video signal or a 3D image signal from the received video signal and may again separate the 3D image signal into a left-eye image signal and a right-eye image signal. The left-eye image signal and the right-eye image signal may be scaled into at least one of the various exemplary forms illustrated in FIG. 5 and the scaled video signal may then be output in a specific format shown in FIG. 4. Scaling may be performed before or after the output format is created.

The formatter 175 may receive an OSD signal of the OSD generator 174 or an OSD signal mixed with a decoded video signal and separate a 3D image signal from the received OSD signal and may then separate the 3D image signal into multiple-view video signals. For example, the 3D image signal may be separated into a left-eye image signal and a right-eye image signal, the separated left-eye and right-eye image signals may be scaled as shown in FIG. 5, and the scaled video signals may then be output in a specific format shown in FIG. 4.

The OSD generator 174 may directly perform the video signal generation procedure or scaling procedure described above on an OSD output. When the OSD generator 174 directly performs scaling on an OSD, the formatter 175 need not perform scaling on the OSD. In this case, the OSD generator 174 not only generates the OSD signal but also scales the OSD signal according to the depth or slope of the OSD and then outputs the OSD signal in a suitable format. Here, the format of the OSD signal output by the OSD generator 174 may be one of the formats of a left-eye image signal and a right-eye image signal or various combined formats of left and right images as shown in FIG. 4. Here, the output format is the same as the output format of the formatter 175.

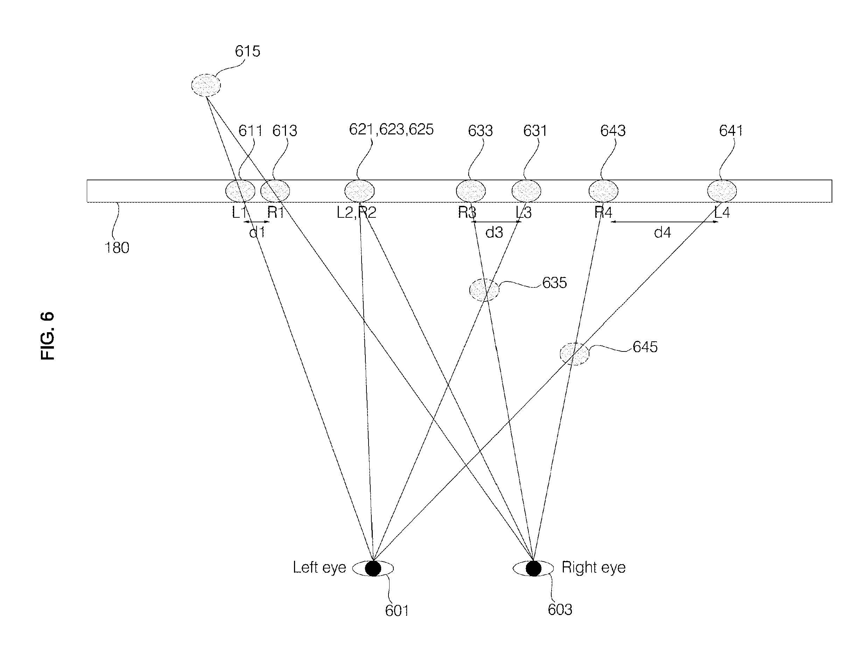

FIG. 6 illustrates how an apparent depth of a 3D image or a 3D object varies according to an embodiment of the present invention varies.

According to the embodiment of the present invention described above, a 3D image includes multiple-view images, which may be exemplified by a left-eye image and a right-eye image. How the position at which an image is formed as perceived by the user changes depending on the interval between the left-eye image and the right-eye image is illustrated in FIG. 6. The stereoscopic effect or perspective effect of an image perceived by the user according to the distance or time difference between left-eye and right-eye images is described below with reference to FIG. 6.

FIG. 6 shows a plurality of images or a plurality of objects having different apparent depths. The shown objects are referred to as a "first object 615", a "second object 625", a "third object 635", and a "fourth object 645".

The first object 615 includes a first left-eye image based on a first left-eye image signal and a first right-eye image based on a first right-eye image signal. That is, a video signal for displaying the first object includes the first left-eye image signal and the first right-eye image signal. FIG. 6 shows positions at which the first left-eye image based on the first left-eye image signal and the first right-eye image based on the first right-eye image signal are displayed on the display unit 180. FIG. 6 also shows the interval between the first left-eye image and the first right-eye image displayed on the display unit 180. The above description of the first object can be applied to the second to fourth objects. In the following, a left-eye image and a right-eye image displayed on the display unit 180 for each object, the interval between the two images, and the object will be described with like reference numerals for ease of explanation.

The first object 615 includes a first right-eye image 613 (shown as "R1" in FIG. 6) and a first left-eye image 611 (shown as "L1" in FIG. 6). The interval between the first right-eye image 613 and the first left-eye image 611 is set to d1. The user perceives that an image is formed at an intersection between a line connecting a left eye 601 and the first left-eye image 611 and a line connecting a right eye 603 and the first right-eye image 613. Thus, the user perceives that the first object 615 is located behind the display unit 180. The distance between the display unit 180 and the first object 615 as perceived by the user can be expressed as a depth. In this embodiment, the depth of the 3D object that the user perceives to be located behind the display unit 180 has a negative value (-). Thus, the depth of the first object 615 has a negative value (-).

The second object 625 includes a second right-eye image 623 (shown as "R2" in FIG. 6) and a second left-eye image 621 (shown as "L2" in FIG. 6). According to this embodiment, the second right-eye image 623 and the second left-eye image 621 are displayed at the same position on the display unit 180. That is, the interval between the second right-eye image 623 and the second left-eye image 621 is 0. The user perceives that an image is formed at an intersection between a line connecting the left eye 601 and the second left-eye image 621 and a line connecting the right eye 603 and the second right-eye image 623. Thus, the user perceives that the second object 625 is displayed on the display unit 180. In this embodiment, the second object 625 can be referred to as a "2D object" or "3D object". The second object 625 has a depth of zero which is the same as the depth of the display unit 180.

3D objects that are perceived to be located at a position protruding from the display unit 180 toward the user are described below using the third object 635 and the fourth object 645 as examples. How the degree of the perspective or stereoscopic effect perceived by the user changes as the interval between the left-eye image and the right-eye image changes is also described below with reference to the third object 635 and the fourth object 645 as examples.

The third object 635 includes a third right-eye image 633 (shown as "R3" in FIG. 6) and a third left-eye image 631 (shown as "L3" in FIG. 6). The interval between the third right-eye image 633 and the third left-eye image 631 is set to d3. The user perceives that an image is formed at an intersection between a line connecting the left eye 601 and the third left-eye image 631 and a line connecting the right eye 603 and the third right-eye image 633. Thus, the user perceives that the third object 635 is located in front of the display unit 180, i.e., located at a position nearer to the user than the display unit 180. That is, the third object 635 is perceived by the user to be located at a position protruding from the display unit 180 toward the user. In this embodiment, the depth of the 3D object that the user perceives to be located in front of the display unit 180 has a positive value (+). Thus, the depth of the third object 635 has a positive value.

The fourth object 645 includes a fourth right-eye image 643 (shown as "R4" in FIG. 6) and a fourth left-eye image 641 (shown as "L4" in FIG. 6). The interval between the fourth right-eye image 643 and the fourth left-eye image 641 is set to d4. Here, the intervals d3 and d4 satisfy an inequality of d3<d4. The user perceives that an image is formed at an intersection between a line connecting the left eye 601 and the fourth left-eye image 641 and a line connecting the right eye 603 and the fourth right-eye image 643. Thus, the user perceives that the fourth object 645 is located in front of the display unit 180, i.e., located at a position nearer to the user than the display unit 180, and that the fourth object 645 is also located nearer to the user than the third object 635. That is, the fourth object 645 is perceived by the user to be located at a position protruding from both the display unit 180 and the third object 635 toward the user. Here, the depth of the fourth object 645 has a positive value (+).

The image display apparatus 100 may adjust the positions of a left-eye image and a right-eye image displayed on the display unit 180 so that the user perceives that an object including the left-eye and right-eye images is located behind or in front of the display unit 180. The image display apparatus 100 may also adjust the interval between a left-eye image and a right-eye image displayed on the display unit 180, thereby adjusting the apparent depth of an object including the left-eye and right-eye images.

From the above description with reference to FIG. 6, it can be seen that whether the depth of an object including a left-eye image and a right-eye image has a positive value (+) or a negative value (-) is determined according to the left and right display positions of the left-eye and right-eye images. As described above, an object having a positive depth is perceived by the user to be located protruding from the display unit 180. On the other hand, an object having a negative depth is perceived by the user to be located behind the display unit 180.

It can also be understood from FIG. 6 that the apparent depth of the object, i.e., the distance between the display unit 180 and the position at which the 3D image is located as perceived by the user, varies depending on the absolute value of the interval between the left-eye and right-eye images.

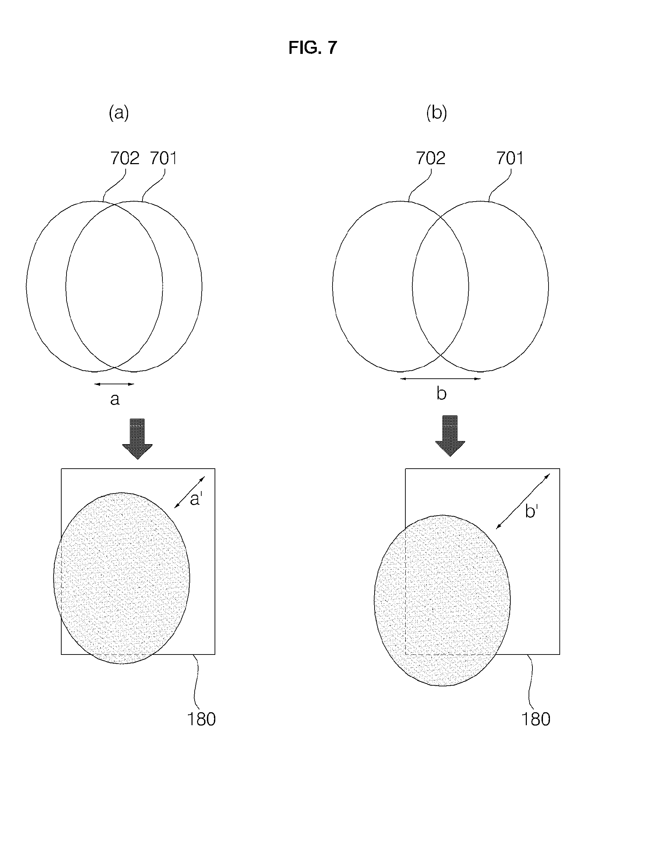

FIG. 7 shows how the apparent depth of an image is controlled according to an embodiment of the present invention. It can be seen from FIG. 7 that the apparent depth of the same image or the same 3D object varies according to the interval between a left-eye image 701 and a right-eye image 702 displayed on the display unit 180. In this embodiment, the depth of the display unit 180 is set to zero. The depth of an image which is perceived to be located protruding from the display unit 180 is set to a positive value.

The interval between a left-eye image 701 and a right-eye image 702 shown in FIG. 7(a) is "a". The interval between a left-eye image 701 and a right-eye image 702 shown in FIG. 7(b) is "b". That is, the interval between the left-eye image 701 and the right-eye image 702 illustrated in FIG. 7(a) is greater than that of FIG. 7(b).

In this case, the apparent depth of the 3D image or the 3D object shown in FIG. 7(a) is greater than the apparent depth of the 3D image or the 3D object shown in FIG. 7(b) as described above with reference to FIG. 6. When the apparent depths of the 3D images or the 3D objects shown in FIGS. 7(a) and 7(b) are numerically represented by a' and b', respectively, it can be seen from the relation of a<b described above that the apparent depths a' and b' also satisfy a relation of a'<b'. That is, when a 3D image viewed as protruding from the screen is implemented, the expressed apparent depth may be increased or decreased by increasing or decreasing the interval between the left-eye image 701 and the right-eye image 702.

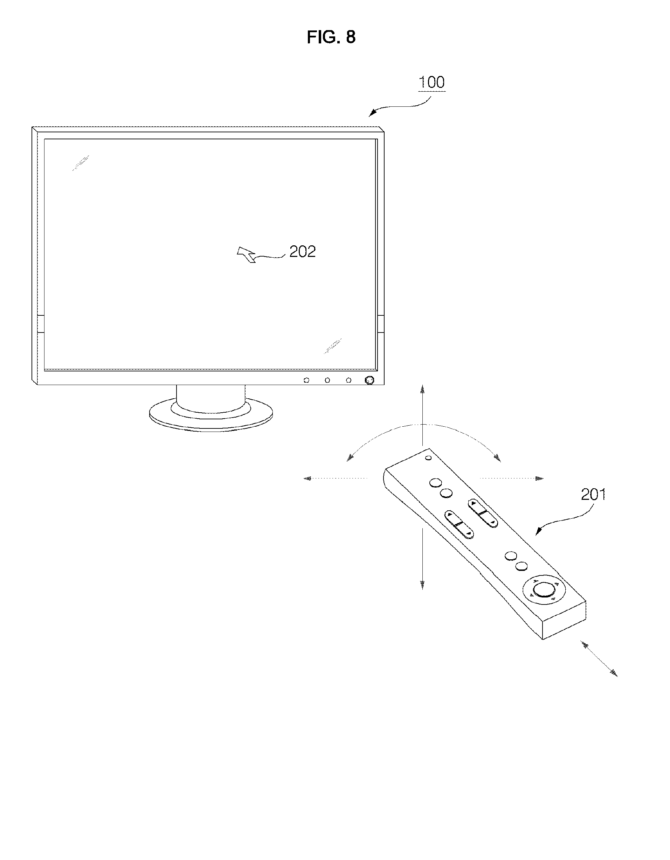

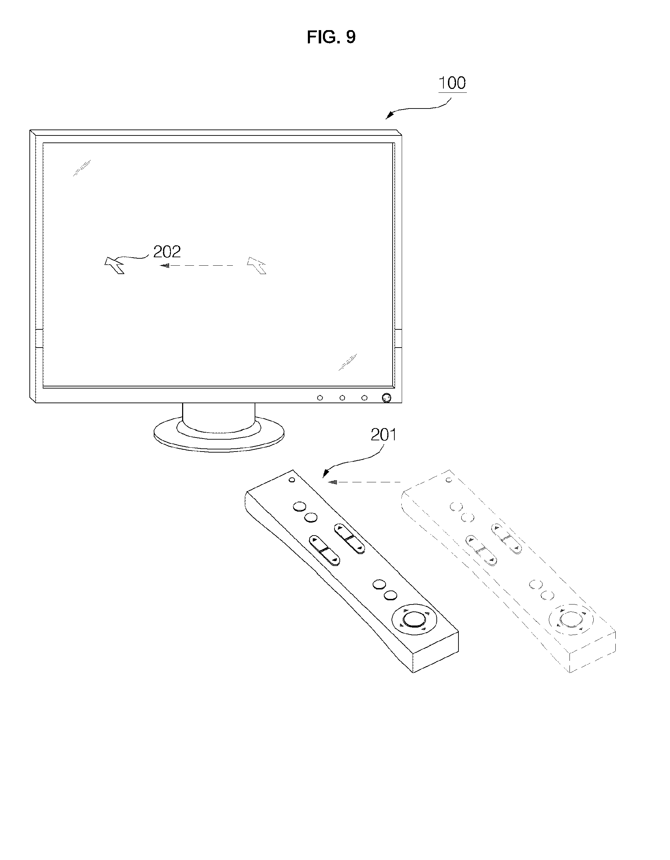

FIGS. 8 and 9 illustrate an image display apparatus and a remote control device according to an embodiment of the present invention.

The image display apparatus 100 can be controlled by a signal transmitted by the remote control device 200. The user may input a command such as power on/off, channel up/down, and volume up/down to the image display apparatus 100 using the remote control device. The remote control device 200 transmits a signal including a command corresponding to control by the user to the image display apparatus 100. The image display apparatus 100 may identify the signal received from the remote control device 200 and may generate a corresponding control signal or may perform an operation corresponding to the command included in the signal.

The remote control device 200 may transmit a signal to the image display apparatus 100 according to an IR communication protocol. The remote control device 200 may transmit a signal to the image display apparatus 100 or may receive a signal transmitted by the image display apparatus 100 according to a different type of wireless communication protocol. Among remote control devices, there is a remote control device 200 which can detect movement of the user and transmit a signal including a command corresponding to the detected movement to the image display apparatus 100. In the following description of this embodiment, such a remote control device 200 is exemplified by a pointing device. According to various embodiments of the present invention, not only the pointing device but also a general wireless/wired mouse, an air mouse, or various other pointing devices, remote control devices in various shapes such as rings, bracelets, or thimbles may each be used as the remote control device 200.

In the embodiment described with reference to FIGS. 8 and 9, a pointing device 201, the perspective views of which are illustrated in FIGS. 8 and 9, is employed as an example of the remote control device 200 which can input a command to the image display apparatus 100 in order to remotely control the image display apparatus 100.

In this embodiment, the pointing device 201 may transmit and receive signals to and from the image display apparatus 100 according to an RF communication protocol. As shown in FIG. 8, a pointer 202 corresponding to the pointing device 201 may be displayed on the image display apparatus 100.

The user may rotate or move the pointing device 201 up, down, left, right, forward, and backward. The pointer 202 displayed on the image display apparatus 100 moves in response to movement of the pointing device 201. FIG. 9 illustrates an example wherein the pointer 202 displayed on the image display apparatus 100 moves in response to movement of the pointing device 201.

In the example illustrated in FIG. 9, when the user moves the pointing device 201 left, the pointer 202 displayed on the image display apparatus 100 also moves left in response to the movement of the pointing device 201. To accomplish this, the pointing device 201 may include a sensor capable of detecting movement. Information regarding movement of the pointing device 201 detected through the sensor of the pointing device 201 is transmitted to the image display apparatus 100. The image display apparatus 100 may calculate coordinates of the pointer 202 from the information regarding movement of the pointing device 201. The image display device 100 may display the pointer 202 according to the calculated coordinates.

As shown in FIGS. 8 and 9, the pointer 202 displayed on the image display apparatus 100 may move in response to vertical or horizontal movement or rotation of the pointing device 201. The movement speed or direction of the pointer 202 may correspond to the movement speed or direction of the pointing device 201.

To accomplish the operations or functions of the pointing device 201 described above, the pointing device 201 may include lower modules such as a wireless communication unit, a user input unit, a sensing unit, a remote control signal output unit, a power supply unit, a remote control information storage unit, and a remote control device. That is, the remote controller of the pointing device processes information or a signal detected through the user input unit and/or the sensing unit to generate a remote control signal. The remote control signal may be generated, for example, based on information obtained from the user input unit such as information indicating a touched or pressed position of a keypad or button of the user input unit or information indicating a time during which the keypad or button is kept pressed and information obtained from the sensing unit such as information indicating the coordinates of a position to which the pointing device has been moved or indicating an angle to which the pointing device has been rotated.

The remote control signal generated through the above procedure is transmitted to the image display apparatus through a remote control wireless communication unit. More specifically, a remote control signal output through the remote control wireless communication unit is input to the remote control device interface unit 140 of the image display apparatus. The remote control wireless communication unit may receive a wired/wireless signal transmitted by the image display apparatus.

The remote control information storage unit stores various types of programs and application data required for control or operation of the image display apparatus or the pointing device. For example, the remote control information storage unit may store a frequency band used when wireless communication is performed between the image display apparatus and the pointing device so that the stored remote control information regarding the frequency band may be used for next communication.

The power supply unit is a module for providing power or the like required to drive the pointing device. For example, when the remote controller outputs a signal issuing an instruction to temporarily stop or resume power supply according to movement of the pointing device detected by the sensing unit, the power supply unit may determine whether or not to supply power according to the control signal, thereby saving power during times when the pointing device is not used or is not in operation.

In another example, a specific command may be set to be input to the image display apparatus 100 in response to movement of the pointing device 201. That is, a specific command may be input or generated only through movement of the pointing device even when it is not detected that a specific pressure, touching, or the like has been applied to the user input unit. For example, the size of an image displayed on the image display apparatus 100 may be increased or decreased by moving the pointing device 201 forward or backward. The examples of the pointing device do not limit the scope of the present invention.

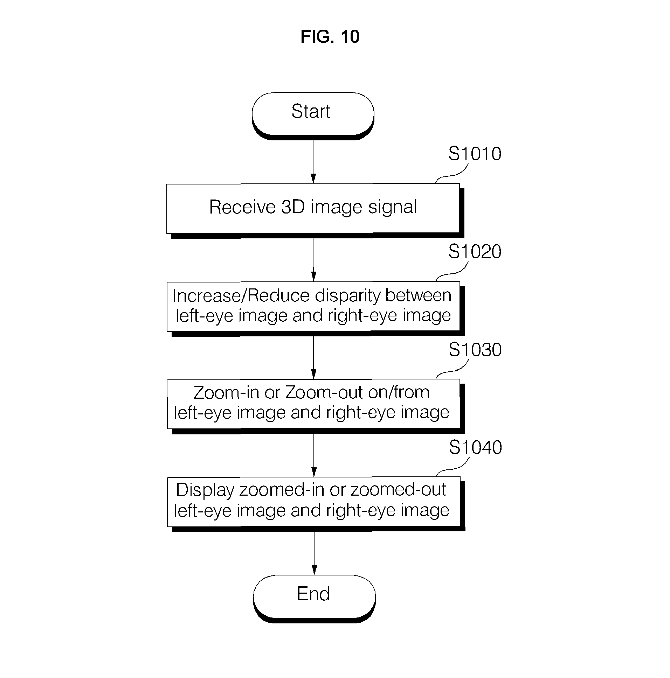

FIG. 10 is a flow chart illustrating a method for operating an image display apparatus according to an embodiment of the present invention.

Referring to FIG. 10, the image display apparatus receives a 3D image signal through a variety of paths in step S1010. The 3D image signal for displaying a 3D image may be received or input from the broadcast signal receiver 110, the network interface unit 120, the external device I/O unit 130, the storage unit 150, or the like.

The 3D image signal may be a multi-view image that includes, for example, a left-eye image signal and a right-eye image signal. In more detail, the 3D image may be displayed as a combination of the left-eye image and the right-eye image, and a depth of the 3D image is increased or reduced in response to a disparity between the left-eye image and the right-eye image.

The controller 170 may add or reduce a disparity between the left-eye image and the right-eye image to adjust the depth of a 3D image in step S1020. Namely, in order to reduce the depth of a 3D image viewed as protruding from the screen toward the user, it is necessary to reduce a disparity between the left-eye image and the right-eye image. Thus, in the case of a 3D image viewed as protruding from the screen (i.e., a 3D image having a depth value greater than zero '0'), the shorter the disparity between the left-eye image and the right-eye image, the smaller the depth effect. Therefore, provided that the left-eye image is shifted to the left on the basis of the original display position and the right-eye image is shifted to the right on the basis of the original display position, a disparity and a depth of a 3D image viewed as protruding from the screen at a position between the left-eye image and the right-eye image can be reduced.

In this case, the disparity may be increased or reduced in consideration of the size of screen and the size of viewing space (i.e., a distance from a user to the image display apparatus). That is, if the size of an initially generated 3D image is different from the size of a screen where the 3D image is actually reproduced, or if a 3D image that has been generated to be reproduced in a wide viewing space is reproduced by the image display apparatus located in a narrow or small space, it is necessary to adjust the depth effect so that a disparity is also adjusted for such depth effect adjustment.

For example, if a 3D image manufactured for a movie theater is reproduced by a household image display apparatus, the image display apparatus size, the installation space, and the actual viewing distance are diversified so that depth effects suitable for individual environments are also changed in response to the diversified result.

If a 3D image optimized for a 50-inch screen (50" screen) is displayed on a 60-inch screen (60" screen), a depth effect of the image displayed on the 60" screen is greater than that of the image displayed on the 50" screen. Therefore, when the 3D image optimized for the 50" screen is displayed on the 60" screen, the user has to view the 3D image at a longer distance from the screen so as to feel the appropriate depth effect.

In contrast, if the image display apparatus for displaying the 50" screen is installed in a space where the 60" screen can be displayed, the user has to move closer to the image display apparatus as compared to the usual case so as to view a 3D image, resulting in greater inconvenience of the user.

Therefore, in order to provide a user with an optimum depth effect while a 3D image is reproduced under a variety of environments, complementary policies depending on variation of a viewing environment are needed.

However, if display positions of a left-eye image and a right-eye image are changed to adjust a disparity, a specific region on which no images are displayed occurs in the display 180. Specifically, if the display positions of the left-eye image and the right-image image are shifted to the right or left or horizontally, there is a high possibility of generating a region on which no images are displayed at each edge part of both sides of the display unit 180. As the display positions of the left-eye image and the right-eye image are changed, a region moving out of the screen of the display unit 180 may occur in the left-eye image and the right-eye image such that the region is not displayed on the display unit 180 and is lost.

Accordingly, in order to prevent a region on which no images are displayed from occurring in the display unit 180, a method for enlarging each image may be used before or after display positions of the left-eye image and the right-eye image are changed. Although display positions of the left-eye image and the right-eye image are changed, if an image is enlarged not to generate an empty space on the screen, a 3D image is displayed on all regions of the display unit 180.

In addition, in order to prevent a damaged or lost part from being generated on the left-eye image and the right-eye image although the display positions of the left-eye image and the right-eye image are changed, the left-eye image and the right-eye image are reduced and used in such a manner that all regions of each image belong to the screen of the display unit 180 after the display positions of the left-eye image and the right-eye image are changed. In this case, although the 3D image is reduced in size, all regions of the image may be displayed on the display 180 without generating a severed or cut part caused by the image moving out of the screen. Therefore, the controller 170 can move the display position of each image to increase or reduce a disparity between the left-eye image and the right-eye image, and can enlarge or reduce the left-eye image and the right-eye image at the same ratio in step S1030.

Of course, it should be noted that the order of a step for enlarging or reducing the image and a step for moving an image display position for increasing/reducing a disparity is not predefined, and respective steps may be simultaneously or sequentially carried out. The display unit 180 displays the left-eye image and the right-eye image that have a disparity and an image size adjusted by the controller 170 in step S1040.

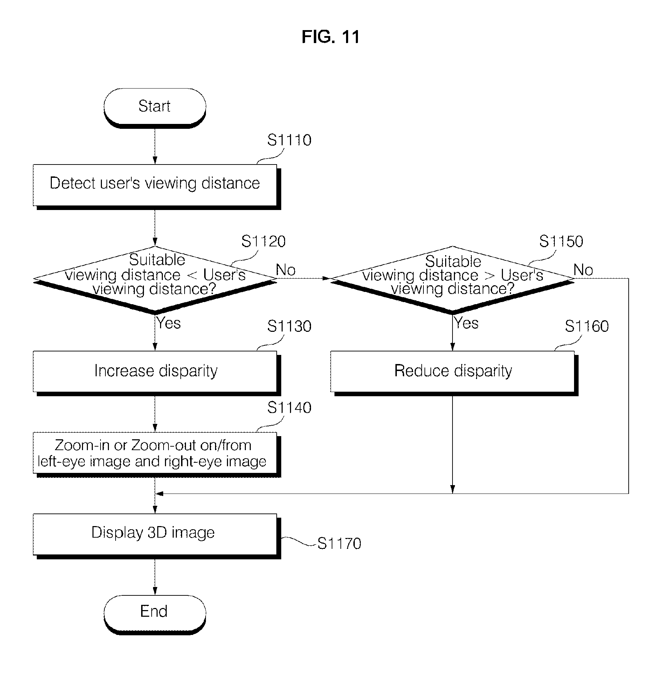

FIG. 11 is a flowchart illustrating a method for operating the image display apparatus according to another embodiment of the present invention.

Referring to FIG. 11, in accordance with one embodiment of the present invention, the depth of a 3D image is controlled in consideration of the screen size and/or the user's viewing distance. In addition, a disparity between the left-eye image and the right-eye image is increased or reduced to control the depth effect. Therefore, information regarding the distance from the image display apparatus to the user may be required to control the depth effect. In order to recognize either the user position or the distance to the user, a sensor unit such as a position sensor may be contained in the image display apparatus. For example, if the position sensor detects the user position, the controller 170 may calculate the user's viewing distance. Through a variety of methods, the image display apparatus may detect the user's viewing distance in step S1110.

On the other hand, although the image display apparatus of the user may recognize not only the user's viewing distance using the position sensor, etc. but also the depth effect in response to the recognized viewing distance, it should be noted that the user may also establish the depth effect of the 3D image according to another embodiment of the present invention. That is, the user enters a user signal to establish a depth effect, such that the depth effect can be increased or reduced in response to the user's viewing distance, user interest, and fatigue, etc. encountered in the current viewing space. The user may enter a signal for setting the depth effect using the remote control device 200 and the like. This signal for establishing the depth effect may be input to the image display apparatus through the user input unit such as a remote control device interface unit 140. In this case, the controller 170 need not recognize a user's viewing distance or calculate a disparity to be increased or reduced in response to the viewing distance, and the controller 170 has only to process a 3D image signal with the depth effect established by the depth-effect setup signal entered by the user.

Referring to FIG. 11, if the user's viewing distance is recognized, the controller 170 compares the distance (i.e., a suitable viewing distance) optimized for the 3D image to be reproduced with the user's viewing distance in step S1120. If the user's viewing distance is longer than the suitable viewing distance, the controller 170 increases a disparity between the left-eye image and the right-eye image to maintain a suitable depth effect perceived by the user in step S1130. If the suitable viewing distance is different from the user's viewing distance, the user may move from a current position to another position in response to the suitable viewing distance. However, in accordance with the image display apparatus and a method for operating the same according to one embodiment of the present invention, a method for controlling the depth effect may be efficiently utilized when the user's movement radius is limited by the size of the viewing distance or the like.

If a disparity between the left-eye image and the right-eye image is increased or reduced in response to the suitable depth effect, the controller 170 may enlarge or reduce the left-eye image and the right-eye image so as to prevent either a region where no images are displayed or the lost image information from being generated on the display 180 due to the movement of display positions of the left-eye image and the right-eye image in step S1140.

If the user's viewing distance is shorter than the suitable viewing distance in step S1150, a user who views a 3D image at a position nearer to the image display apparatus may excessively feel the depth effect of the 3D image. In this case, if the depth effect of a 3D image is reduced, the image display apparatus may provide a 3D image having an optimum depth effect at a current viewing environment of the user. Therefore, in order to reduce the depth effect of the 3D image, the controller 170 may reduce a disparity between the left-eye image and the right-eye image in step S1160. Of course, in accordance with the above-mentioned method, it is assumed that a reproduced 3D image is a 3D image (having a positive(+) depth value) viewed as protruding from the screen.

Upon completion of depth effect control and size control of the 3D image, the controller 170 outputs the left-eye image signal and the right-eye image signal to the display unit 180, and the display unit 180 displays the left-eye image and the right-eye image so that a 3D image is displayed in step S1170.

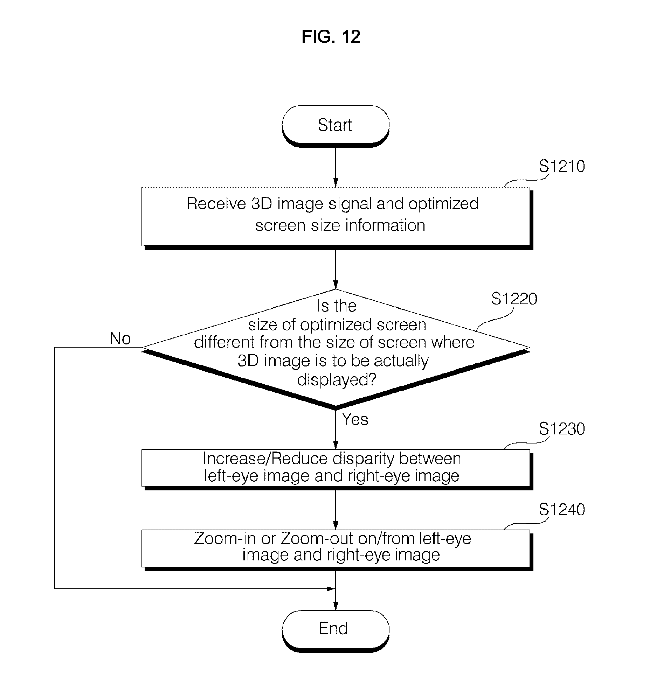

FIG. 12 is a flowchart illustrating a method for operating the image display apparatus according to still another embodiment of the present invention.

Referring to FIG. 12, the image display apparatus receives a 3D image signal to reproduce a 3D image. In addition, the image display apparatus receives the 3D image signal and information regarding the screen size optimized for reproduction of the corresponding 3D image in step S1210. The optimum screen size information is required to consider the screen size when adjusting the depth effect under the condition that the size of a screen where the 3D image is actually reproduced is different from the optimum screen size. The optimized screen size information of the 3D image may be obtained from the number of image pixels or may also be recognized by other various methods. An exemplary case in which the optimized screen size information is configured in the form of metadata and is then transmitted together with a 3D image signal will hereinafter be described in detail. The optimized screen size information may indicate, for example, information indicating whether the corresponding 3D image signal has been manufactured for a 3D image to be played at a movie theater, or information indicating whether the corresponding 3D image signal has been manufactured for a 3D image to be played at a mobile or portable image display apparatus such as a PDA.

The controller 170 determines, using the optimized screen size information, whether the screen size optimized for reproduction of a 3D image is different from the size of a screen of the display unit 180 on which a 3D image will be actually displayed in step S1220. If the optimized screen size is different from the screen size of the display unit 180, the controller 170 increases or reduces a disparity between the left-eye image and the right-eye image in consideration of the difference between the optimized screen size and the screen size of the display 180 in step S1230.

In order to increase or reduce a disparity, as previously stated above, the controller 170 horizontally moves a specific position at which the left-eye image and the right-eye image are to be displayed. In the case of a 3D image viewed as protruding from the screen, if the left-eye image moves to the right and the right-eye image moves to the left, a disparity between the left-eye image and the right-eye image is increased and the depth effect is also increased. On the other hand, if the left-eye image moves to the left and the right-eye image moves to the right, a disparity between the left-eye image and the right-eye image is reduced and the depth effect is also reduced. Needless to say, although any one of the left-eye image and the right-eye image moves to another position, it is possible to implement disparity control.

The disparity may be increased or reduced according to the screen size. For example, provided that a 3D image signal is output without change under the condition that the size of a screen where a 3D image is to be actually displayed is smaller than the optimized screen size, the depth effect perceived by the user who maintains the same viewing distance may be reduced. In this case, a disparity between the left-eye image and the right-eye image is increased so that the depth effect is also increased. On the contrary, provided that a 3D image signal is output without change under the condition that the size of a screen where a 3D image is to be actually displayed is greater than the optimized screen size, the depth effect perceived by the user who maintains the same viewing distance may be excessively increased. In order to solve this problem, a disparity between the left-eye image and the right-eye image is slightly reduced so that the depth effect can be suitably reduced.

When adjusting the disparity as described above, a region in which no images are displayed may occur in the display unit as described above, or some parts of the left-eye image and some parts of the right-eye image move out of the screen of the display unit 180 so that image information may be damaged or lost. Thus, in order to solve this problem, the left-eye image or the right-eye image may be enlarged or reduced in step S1240. In order to prevent a specific part where no images are displayed from being generated in some regions of the display unit 180, the left-eye image and the right-eye image are increased in size. In addition, in order to prevent image information from being damaged or lost, the left-eye image and the right-eye image may be reduced in size.

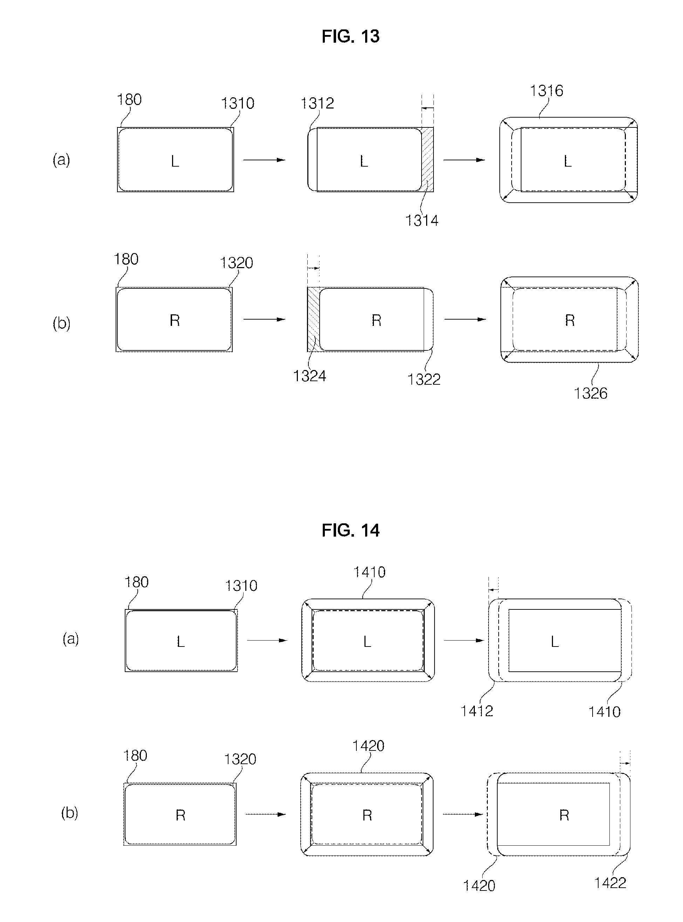

FIGS. 13 to 16 illustrate image processing methods when a parallax interval (i.e., a disparity) is increased or reduced according to one embodiment of the present invention.

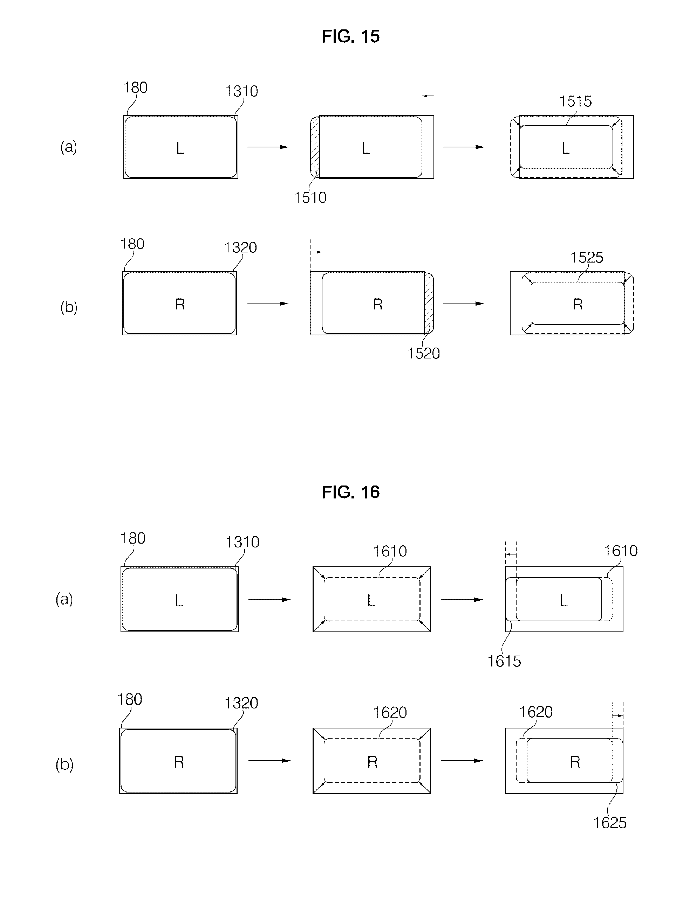

The embodiment shown in FIGS. 13 and 14 relates to a scheme for enlarging the left-eye image and the right-eye image when adjusting a disparity in such a manner that no empty region occurs in the display unit 180. The embodiment shown in FIGS. 15 and 16 relates to a scheme for reducing the left-eye image and the right-eye image when adjusting a disparity in such a manner that no empty region occurs in the display unit.

FIG. 13(a) is a conceptual diagram illustrating a method for enlarging the left-eye image after adjusting a disparity between the left-eye image and the right-eye image to remove a region where no images are displayed from the screen, and FIG. 13(b) is a conceptual diagram illustrating a method for enlarging the right-eye image after adjusting the disparity between the left-eye image and the right-eye image. FIG. 13(a) illustrates a method for processing the left-eye image, and FIG. 13(b) illustrates a method for processing the right-eye image.

Referring to FIG. 13(a), in order to reproduce a 3D image, the left-eye image 1310 is displayed on the display unit 180. As shown in FIG. 13(a), the left-eye image 1310 moves to the left so as to implement disparity control. As the left-eye image 1310 moves to adjust a disparity, a region 1314 where no images are displayed occurs in the display unit 180, and a region 1312 where an image signal is lost occurs in the left-eye image because some parts of the left-eye image move out of the display unit 180. As can be seen from FIG. 13(a), if the left-eye image moves to the left, an image signal regarding some left parts of the left-eye image is lost, and a region 1314 where no images are displayed is generated at some right parts of the display unit 180.

Referring to FIG. 13(b), in order to reproduce a 3D image, the display unit 180 may display the right-eye image 1320 together with the left-eye image 1310. For disparity control, the display position of the right-eye image 1320 moves to the right. Since the right-eye image 1320 moves to adjust the disparity, a region 1324 where no images are displayed is generated in the display unit 180, and a region 1322 where an image signal is lost because the region 1322 moves out of the display unit 180, is generated in the right-eye image.

In addition, as shown in FIG. 13(b), if the right-eye image moves to the right, an image signal regarding some right parts of the right-eye image is lost, and a region 1324 where no images are displayed is generated at some right parts of the display unit 180.

In order to solve the problem in which the regions 1314 and 1324 where no images are displayed are generated in the display unit 180, the controller 170 may enlarge the left-eye image 1310 and the right-eye image 1320. In this case, image signal processing for shifting display positions of the left-eye image and the right-eye image or another image signal processing for enlarging or reducing the left-eye image and the right-eye image may be carried out by the scaler 173b of the controller 170.

The enlarged left-eye image 1316 or the enlarged right-eye image 1326 may be minimized to cover all regions of the display unit 180 after the enlarged left-eye image 1316 and the enlarged right-eye image 1326 have moved to the opposite directions for increasing/reducing the disparity. However, as the enlargement rate of an image is increased, the number of lost parts that move out of the display unit 180 so that an image signal is lost is increased.

FIGS. 14(a) and 14(b) illustrate a method for controlling the depth effect by adjusting a disparity between the enlarged left-eye image and the enlarged right-eye image after the left-eye image and the right-eye image are enlarged, so as to remove a region where no images are displayed from the display screen.

FIG. 14(a) is a conceptual diagram illustrating a method for processing the left-eye image, and FIG. 14(b) is a conceptual diagram illustrating a method for processing the right-eye image.

Referring to FIG. 14(a), the left-eye image 1310 and the right-eye image 1320 are displayed on the display unit 180, and the controller 170 may first process the left-eye image signal and the right-eye image signal so as to enlarge each of the left-eye image signal and the right-eye image signal. In addition, the controller 170 may increase or reduce a disparity of the enlarged left-eye image 1410 and the enlarged right-eye image 1420. The enlargement rate of each image may be calculated from both the moving distance of the display position of each image and the sizes of the original left-eye and right-eye images 1310 and 1320.

In the embodiment shown in FIG. 14, the left-eye image 1410 enlarged for disparity control moves to the left and the right-eye image 1420 enlarged for such disparity moves to the right. In this case, although regions 1412 and 1422 where image signals are lost may be generated in each image, a region where no images are displayed is not generated in the display unit 180.

In order to overcome the problem in which some regions of each image are lost in response to the movement of display positions of the left-eye and right-eye images, FIG. 15(a) is a conceptual diagram illustrating a method for reducing the left-eye image after adjusting a disparity between the left-eye image and the right-eye image, and FIG. 15(b) is a conceptual diagram illustrating a method for reducing the right-eye image after adjusting the disparity between the left-eye image and the right-eye image. FIG. 15(a) illustrates a method for processing the left-eye image, and FIG. 15(b) illustrates a method for processing the right-eye image.

Similar to the embodiment in which the left-eye image 1310 and the right-eye image 1320 are enlarged in size, the process for reducing the left-eye image 1310 and the right-eye image 1320 and video signal processing for changing the display position may be carried out by the scaler 173b.

Referring to FIGS. 15(a) and 15(b), the left-eye image 1310 and the right-eye image 1320 are displayed to reproduce a 3D image. In order to adjust a disparity, the controller 170 moves the left-eye image 1310 to the left and moves the right-eye image 1310 to the right in such a manner that the display positions of respective images are shifted. In a 3D image viewed as protruding from the screen toward the user (i.e., a 3D image having a depth value higher than zero '0'), an exemplary case in which a disparity between the left-eye image 1310 and the right-eye image 1320 is reduced to decrease the depth effect will hereinafter be described with reference to FIG. 15. Of course, the movement of an image display position shown in FIG. 15 is disclosed only for illustrative purposes, and an exemplary case for controlling the depth effect of a 3D image by moving respective images in opposite directions may also be contained in the embodiment of the present invention.

In response to the movement of display positions of the left-eye image 1310 and the right-eye image 1320, regions 1510 and 1520 moving out of the display unit 180 are generated at some left regions of the left-eye image 1310 and some right regions of the right-eye image 1320, respectively. As a result, the edge of an image may be severed or cut in response to depth adjustment. In order to solve this problem, the controller 170 moves the display positions of the left-eye image 1310 and the right-eye image 1320, and then reduces each image at a certain ratio in such a manner that the part located out of the screen of the display unit 180 can be removed. In this case, if the image is excessively reduced in size, the above-mentioned problem of causing the severed image may be solved, but there unavoidably arises another problem in which no images are displayed on the display unit 180.

If the left-eye image 1310 and the right-eye image 1320 are reduced in size, the lost regions 1510 and 1520 are contained in the display unit 180, such that the above-mentioned problem in which the image edge is severed even though the display positions of the left-eye image 1310 and the right-eye image 1320 are shifted, does not occur. The reduced left-eye image 1515 and the reduced right-eye image 1525 are finally displayed on the display unit 180.

In order to overcome the problem in which some regions of each image are lost in response to the movement of display positions of the left-eye and right-eye images, FIG. 16(a) is a conceptual diagram illustrating a method for reducing the left-eye image after adjusting a disparity between the left-eye image and the right-eye image, and FIG. 16(b) is a conceptual diagram illustrating a method for reducing the right-eye image after adjusting the disparity between the left-eye image and the right-eye image. FIG. 16(a) illustrates a method for processing the left-eye image, and FIG. 16(b) illustrates a method for processing the right-eye image.

Referring to FIGS. 16(a) and 16(b), in order to increase or reduce the disparity, the controller 170 pre-reduces the left-eye image 1310 and the right-eye image 1320 in consideration of the movement of display positions of the left-eye image 1310 and the right-eye image 1320. The controller 170 reduces the left-eye image 1310 in such a manner that some left regions of the left-eye image 1310 are not deviated from the display unit 180 although the left-eye image 1310 moves to the left, and then changes the display position of the reduced left-eye image 1310. That is, the controller 170 moves the display position of the reduced left-eye image 1610 to the left.

It is assumed that the embodiment in which the right-eye image 1320 moves to the right so as to increase/reduce the disparity is applied even to the right-eye image 1320. In order to prevent the edge part of the right part of the right-eye image 1320 from moving out of the display unit 180 after the movement of the right-eye image 1320, the controller 170 reduces the right-eye image 1320 in consideration of the right movement distance of the right-eye image 1320. The controller 170 moves the display position of the reduced right-eye image 1620 to the right. Therefore, disparity between the reduced/moved right-eye image 1625 and the reduced/moved left-eye image 1615 may be reduced without causing any lost image.

In accordance with the embodiments shown in FIGS. 15 and 16, a 3D image may be displayed without causing the lost regions 1510 and 1520 at the edge parts of both sides of the right-eye image and the right-eye image. In this case, a region where no images are displayed may be generated at the upper and lower ends of the display unit. Therefore, in order to solve the above-mentioned problem, the scheme for vertically enlarging the reduced/moved right-eye and right-eye images may be utilized. That is, the left-eye image signal and the right-eye image signal may be processed by three signal processing steps 1), 2) and 3), i.e., 1) reduction in image size, 2) movement of image display position, and 3) image enlargement in the vertical direction. Needless to say, the order of the above-mentioned three signal processing steps is not pre-defined, and the left-eye image and the right-eye image may be reduced and/or enlarged according to not only the change distance of an image display position for disparity control but also image size information obtained before or after the image reduction.

As is apparent from the above description of embodiments of the present invention, the image display apparatus and the method for operating the same according to embodiments of the present invention can adjust the depth of a 3D image in consideration of a variety of viewing environments, for example, the size of a screen where the 3D image is actually displayed, the user's viewing space, the viewing distance, etc. In addition, the user may establish the depth of a 3D image in response to the user's fatigue or interest.

Specifically, when controlling the depth effect by changing the display positions of the left-eye image and the right-eye image, the problem that no images are displayed on some regions of the display unit due to the right/left movement of the left-eye image and the right-eye image or another problem that some image signals are lost because some parts of the left-eye image and the right-eye image move out of the display unit can be solved by the image display apparatus and the method for operating the same according to the present invention.

The image display apparatus and the method for operating the same according to the foregoing exemplary embodiments are not restricted to the exemplary embodiments set forth herein. Therefore, variations and combinations of the exemplary embodiments set forth herein may fall within the scope of the present invention.

The method for operating an image display apparatus according to the foregoing exemplary embodiments may be implemented as code that can be written on a computer-readable recording medium and thus read by a processor. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner. Programs, code, and code segments to realize the embodiments herein can be construed by one of ordinary skill in the art.

While the present invention has been particularly shown and described with reference to exemplary embodiments thereof, it will be understood by those of ordinary skill in the art that various changes in form and detail may be made therein without departing from the scope of the present invention as defined by the following claims.

## Claims

1. A method for operating an image display apparatus, comprising:
receiving a three-dimensional (3D) image including a left-eye image and a right-eye image;
increasing/reducing a disparity between the left-eye image and the right-eye image;
enlarging the left-eye image and the right-eye image in such a manner that a region where the 3D image is not displayed is not generated on a display screen as positions of the left-eye image and the right-eye image are changed to increase/reduce the disparity; and
displaying the enlarged left-eye image and the enlarged right-eye image.

2. The method according to claim 1, further comprising:
when the left-eye image and the right-eye image moves in a horizontal direction to increase/reduce the disparity, enlarging the left-eye image and the right-eye image.

3. The method according to claim 1, further comprising:
recognizing a user's position through a position sensor so as to detect a viewing distance of the user; and
increasing/reducing the disparity in response to the viewing distance.

4. The method according to claim 1, further comprising:
receiving screen size information optimized for the 3D image; and
comparing the optimized screen size with a size of a screen where the 3D image is to be actually displayed,
wherein the disparity is increased/reduced when the optimized screen size is different from the size of screen where the 3D image is to be actually displayed.

5. The method according to claim 1, further comprising:
receiving a depth control signal serving as a user signal to increase/reduce the disparity,
wherein the disparity is increased/reduced in response to the depth control signal.

6. A method for operating an image display apparatus, comprising:
receiving a three-dimensional (3D) image including a left-eye image and a right-eye image;
increasing/reducing a disparity between the left-eye image and the right-eye image;
reducing the left-eye image and the right-eye image to increase/reduce the disparity in such a manner that all regions of the left-eye image and the right-eye image are displayed on a screen after positions of the left-eye image and the right-eye image are changed to increase/reduce the disparity; and
displaying the reduced left-eye image and the reduced right-eye image.

7. The method according to claim 6, further comprising:
enlarging the left-eye image and the right-eye image in such a manner that the screen is identical to at least one of a horizontal length and a vertical length of the 3D image.

8. The method according to claim 6, further comprising:
detecting a user's viewing distance by recognizing a user position through a position sensor,
wherein the disparity is increased/reduced in response to the viewing distance.

9. The method according to claim 6, further comprising:
receiving information regarding a screen size optimized for the 3D image; and
comparing the optimized screen size with a size of a screen where the 3D image is to be actually displayed,
wherein the disparity is increased/reduced when the optimized screen size is different from the screen size to be actually displayed.

10. The method according to claim 6, further comprising:
receiving a depth control signal serving as a user signal to increase/reduce the disparity,
wherein the disparity is increased/reduced in response to the depth control signal.

11. An image display apparatus comprising:
a controller for receiving a three-dimensional (3D) image including a left-eye image and a right-eye image, and increasing/reducing a disparity between the left-eye image and the right-eye image,
in response to position movement of the left-eye image and the right-eye image to increase/reduce the disparity, enlarging the left-eye image and the right-eye image in such a manner that a region where the 3D image is not displayed is not generated on a display screen, or reducing the left-eye image and the right-eye image in such a manner that all regions of the left-eye image and the right-eye image are displayed on the screen, thereby adjusting the sizes of the left-eye image and the right-eye image; and
a display for displaying at least one of the enlarged left-eye image and the enlarged right-eye image or the reduced left-eye image and the reduced right-eye.

12. The image display apparatus according to claim 11, wherein the controller enlarges the left-eye image and the right-eye image when the left-eye image and the right-eye image moves in a horizontal direction to increase/reduce the disparity.

13. The image display apparatus according to claim 11, wherein, the controller, when reducing the left-eye image and the right-eye image, enlarges the reduced left-eye image and the reduced right-eye image in such a manner that the screen is identical to at least one of a horizontal length and a vertical length of the 3D image.

14. The image display apparatus according to claim 11, further comprising:
a position sensor for recognizing a user position,
wherein the controller detects a user's viewing distance from the user position, and increases/reduces the disparity in response to the viewing distance.

15. The image display apparatus according to claim 11, wherein the controller receives screen size information optimized for the 3D image, and compares the optimized screen size with a size of a screen where the 3D image is to be actually displayed, wherein the disparity is increased/reduced when the optimized screen size is different from the size of screen where the 3D image is to be actually displayed.

16. The image display apparatus according to claim 11, further comprising:
a user input unit for receiving a depth control signal serving as a user signal to increase/reduce the disparity,
wherein the controller increases/reduces the disparity in response to the depth control signal.
